Europäisches Patentamt

European Patent Office

Office européen des brevets

(19)

(11) Veröffentlichungsnummer : **0 162 338**
**B1**

(12) # EUROPÄISCHE PATENTSCHRIFT

(45) Veröffentlichungstag der Patentschrift :
01.02.89

(21) Anmeldenummer : 85105140.9

(22) Anmeldetag : 26.04.85

(51) Int. Cl.⁴ : **G 21 C 11/08**, G 21 C   1/02

(54) **Flüssigmetallgekühlter Kernreaktor mit verbesserter Tankwandkühlung.**

(30) Priorität : 03.05.84 DE 3416397

(43) Veröffentlichungstag der Anmeldung :
27.11.85 Patentblatt 85/48

(45) Bekanntmachung des Hinweises auf die Patenterteilung : 01.02.89 Patentblatt 89/05

(84) Benannte Vertragsstaaten :
AT BE DE FR GB IT NL

(56) Entgegenhaltungen :
FR--A-- 2 002 533
FR--A-- 2 220 847
FR--A-- 2 283 521
FR--A-- 2 319 074
FR--A-- 2 347 749
GB--A-- 2 000 356
GB--A-- 2 090 042
US--A-- 4 302 296
US--A-- 4 357 297
PROCEEDINGS OF THE L.M.F.B.R. SAFETY TOPICAL
MEETING, Band 1, 19-23. Juli 1982, Lyon, FR, Seiten
I/475-I/491; J.A.G. HOLMES: "The role of structural
integrity in liquid metal fast breeder reactor safety"

(73) Patentinhaber : INTERATOM Gesellschaft mit beschränkter Haftung
Friedrich-Ebert-Strasse
D-5060 Bergisch-Gladbach 1 (DE)

(72) Erfinder : Wagner, Jürgen, Dipl.-Ing.
Zedernweg 11
D-5253 Lindlar (DE)

(74) Vertreter : Mehl, Ernst, Dipl.-Ing. et al
Postfach 22 13 17
D-8000 München 22 (DE)

EP 0 162 338 B1

## Beschreibung

Die vorliegende Erfindung betrifft einen flüssigmetallgekühlten Kernreaktor des sogenannten Pool-Typs nach dem Oberbegriff des ersten Anspruchs. Ein derartiger Reaktor ist zur Zeit in Frankreich unter der Bezeichnung « Super-Phénix » im Bau. Bei dieser Bauart befindet sich das gesamte Primärsystem aus Reaktorkern, Wärmetauschern, Pumpen usw. in einem in seinem oberen Teil zylindrischen Behälter, der bis zur erforderlichen Höhe mit flüssigem Natrium gefüllt ist. Dabei erreicht das aus dem Reaktorkern aufgeheizt austretende Kühlmittel Temperaturen (z. B. von 550 °C), denen die Wand des Reaktortanks aus Festigkeitsgründen nicht ausgesetzt werden darf. Es sind daher zusätzliche zylindrische Trennwände vorhanden, die vom unteren Teil des Reaktortanks (wo infolge der Abkühlung des Kühlmittels in den Wärmetauschern eine niedrigere Temperatur herrscht) bis über den Kühlmittelspiegel reichen. In dem so gebildeten schmalen Ringraum wird eine Strömung von abgekühltem Kühlmittel aufrechterhalten, das die Reaktortankwand auf zulässigen Temperaturwerten (ca. 400 °C) hält. Immerhin bedingt dies, daß auf einer verhältnismäßig kurzen (z. B. 1,5 m langen) Strecke der Tankwand die Temperaturspanne von der genannten Kühlmitteltemperatur bis auf die etwa 100 °C betragende Temperatur des den Reaktortank abschließenden Deckels abgebaut werden muß. Die genannten Probleme verschärfen sich noch bei instationärem Betrieb der Anlage, z. B. beim Anfahren oder nach der Abschaltung.

Aufgabe der vorliegenden Erfindung ist eine verbesserte Kühlung des oberen Teils der Tankwand eines Kernreaktors der beschriebenen Art, bei der für den Ausgleich der Temperaturspannen eine größere Strecke zur Verfügung steht und die darüberhinaus geeignet ist, einen Effekt zu unterstützen, der ein Beherrschen von gewissen Störfällen erleichtert, wie sie in Sicherheitsstudien unterstellt worden sind. Dazu gehört auch die Annahme eines Versagens der Absorberstabantriebe bei gleichzeitigem Ausfall der externen Wärmeabfuhr. Die dann ansteigende Kühlmitteltemperatur im oberen Teil des Reaktortanks führt zu einer Längenausdehnung der Absorberstäbe, wodurch diese tiefer in den Reaktorkern eindringen und dessen Reaktivität vermindern können, wenn die Temperatursteigerung genügend lange von der Tankwand ferngehalten werden kann, um eine entgegengesetzt wirkende Wärmeausdehnung des Tanks und damit ein Anheben des Reaktordeckels (und damit der in ihm hängend angeordneten Absorberstäbe) relativ zum Reaktorkern über eine Längenänderung der Tankwand zu vermeiden.

Die Lösung dieser Aufgabe geschieht durch die im kennzeichnenden Teil des ersten Anspruchs angegebenen Mittel. Die dort vorgeschlagene zusätzliche Trennwand schafft im oberen Bereich des Reaktortanks einen weiteren Ringspalt, der nicht mit Kühlmittel, sondern mit dem die Kühlmitteloberfläche abdeckenden Schutzgas gefüllt ist. Bei der bekannt schlechten Wärmeleitfähigkeit von Gasen wird so die Temperatur der Reaktortankwand über einem längeren Zeitraum praktisch unabhängig von derjenigen des heißen Kühlmittels gehalten. Auf eine Auslegung derselben gegen besonders hohe Temperaturen kann dann verzichtet werden. Zur Unterstützung der Isolierwirkung können in dem Ringspalt zusätzlich in bekannter Weise Isolierbleche oder andere geeignete Vorrichtungen untergebracht werden.

Ein Versuch, diese Probleme zu lösen, ist aus der FR-A-2 319 074 bekannt. Hier ist eine zusätzliche, im Abstand zur Reaktortankwand angeordnete, oberhalb des Kühlmittelspiegels, jedoch unterhalb des Tankdeckels endende Trennwand vorgesehen, die einen Ringraum begrenzt, der mit Isoliermaterial, z. B. in Form von Stahlwolle gefüllt ist. Durch eine sich vom Reaktordeckel bis unter den Kühlmittelspiegel erstreckende Schürze ist dieser Raum von dem Gaspolster getrennt, das das Kühlmittel abdeckt ; dies ist erforderlich, damit kein aerosolbeladenes Schutzgas das Isoliermaterial durchsetzt und durch Ablagerungen Wärmebrücken schafft. Diese Konstruktion ist sehr aufwendig und die Beständigkeit des Isoliermaterials über die in Aussicht genommene Lebensdauer eines Kernreaktors hinweg zweifelhaft.

Die als besondere Ausgestaltung der Erfindung im zweiten Anspruch vorgeschlagenen Einrichtungen zur Aufrechterhaltung einer Schutzgasströmung in dem Ringraum unterstützen die Kühlwirkung und sorgen andererseits dafür, daß sich aus dem notwendigerweise mit Flüssigmetall-Aerosolen verunreinigten Schutzgas hier keine Ablagerungen bilden können. Diese können in einfacher Weise durch in den Ringraum hineinragende Rohrleitungen gebildet werden, in die ein Teilstrom der ohnehin vorhandenen Einrichtungen zur Umwälzung und Reinigung des Schutzgases abgezweigt wird.

Die im dritten Anspruch vorgeschlagenen Isolierbleche verringern weiter den Wärmefluß zur Reaktortankwand.

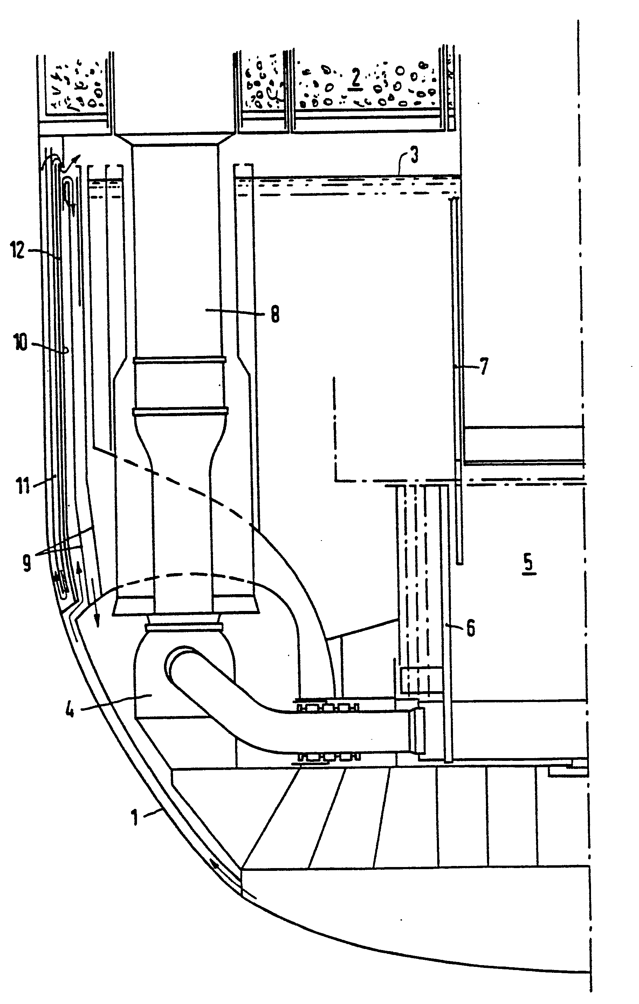

Ein Ausführungsbeispiel der Erfindung ist in der Zeichnung dargestellt und zwar zeigt diese einen halben Längsaxialschnitt.

Ein in seinem oberen Teil zylindrisch ausgeführter Reaktortank 1 ist mit einem Deckel 2 verschlossen und bis zu einem Spiegel 3 mit Flüssigmetall, beispielsweise mit flüssigem Natrium gefüllt. Dieses wird durch Pumpen 4 in Umlauf versetzt, die es in den unteren Teil eines Kernverbandes 5 drücken, der in üblicher Weise aus einer Vielzahl von Brenn- bzw. Brutelementen aufgebaut ist, von denen hier nur eines 6 dargestellt ist. Der Reaktorkern 5 wird durch Absorberstäbe 7 geregelt und bei Bedarf abgeschaltet, die von hier nicht gezeigten, auf dem Deckel 2 angeordneten Antrieben mehr oder weniger tief in Zwischenräuume zwischen den Elementen 6 eingefahren werden können. Das heiße Kühlmittel gibt seine Wärme in Wärmetauschern 8 an einen nach außen führenden Sekundärkreislauf ab und kehrt in die Pumpen 4 zurück. Ein Teil der von diesen aufrechterhaltenen Strömung abgekühlten Kühlmittels wird abgezweigt, um die Wand des Reaktortanks 1 zu kühlen und damit vor der Einwirkung des heißen Kühlmittels zu schützen. Dazu sind Kühlleitbleche 9 vorhanden, die besondere, abgetrennte Ringräume schaffen, in denen das abgekühlte Kühlmittel den durch die Pfeile angedeuteten Weg nimmt. Im oberen Teil der Tankwand, d. h. demjenigen Teil, der in der Nachbarschaft des aufgeheizten Kühlmittels gelegen ist, ist eine zusätzliche Trennwand 10 angeordnet, die an ihrem unteren Ende dicht mit dem Reaktortank 1 verbunden ist und oben über den Kühlmittelspiegel 3 hinausragt, so daß dieses aus dem dadurch gebildeten Ringraum ferngehalten wird. Dieser wird vielmehr mit dem Schutzgas, z. B. Argon gefüllt, das die Oberfläche des Kühlmittels abdeckt und das von einer hier nicht gezeigten Umwälzvorrichtung herrührend in Rohren 11 an das untere Ende des Ringspalts geführt und so in ständiger Zirkulation gehalten wird, so daß sich aus den im Gas enthaltenen Aerosolen keine Ablagerungen bilden können. Etwaige, insbesondere bei Störungsfällen zu erwartende Temperaturerhöhungen des Kühlmittels werden so von dem besonders empfindlichen oberen Teil des Reaktortanks 1 ferngehalten. Im Ringspalt zwischen Reaktortank 1 und zusätzlicher Trennwand 10 sind ferner Isolierbleche 12 angeordnet, die die Wärmestrahlung auf ersteren herabsetzen. Für den Abbau des Temperaturgefälles zwischen dem « kalten » Kühlmittel und dem Reaktordeckel steht dann nicht nur wie bisher die kurze Strecke der Tankwand zwischen Kühlmittelspiegel 3 und Reaktordeckel 2 zur Verfügung, sondern die gesamte Höhe des Ringspaltes. Die zusätzliche Trennwand 10 kann, da sie nur einseitig eingespannt ist, Wärmedehnungen ohne weiteres folgen, zumal sie nur mit geringer Wandstärke ausgeführt zu werden braucht, da sie keine weitere Sicherheitsfunktion hat. Steigt die Temperatur des aus dem Reaktorkern 5 austretenden Kühlmittels an, so dehnen sich die in dasselbe eingetauchten Absorberstäbe 7 um ein gewisses Maß aus und reichen dann tiefer in den Reaktorkern hinein ; sie tragen so inhärent sicher zu einer Verminderung der Reaktivität und damit zu einer Bekämpfung der Ursache der Temperaturerhöhung bei.

## Patentansprüche

1. Flüssigmetallgekühlter Kernreaktor des sogenannten Pool-Typs mit Einrichtungen (9) zur Beaufschlagung der Reaktortankwand (1) mit abgekühltem Kühlmittel und einem das Kühlmittel abdeckenden Gaspolster sowie einer zusätzlichen, im Abstand zur Reaktortankwand (1) angeordneten, oberhalb des Kühlmittelspiegels (3), jedoch unterhalb des Tankdeckels (2) endenden Trennwand (10), dadurch gekennzeichnet, daß der so gebildete Ringraum mit dem Gaspolster in Verbindung steht.

2. Anlage nach Anspruch 1, gekennzeichnet durch Einrichtungen (11) zur Aufrechterhaltung einer Schutzgasströmung in dem Raum zwischen Reaktortankwand (1) und zusätzlicher Trennwand (10).

3. Anlage nach Anspruch 1, gekennzeichnet durch Isolierbleche (12), die an der Gasseite der zusätzlichen Trennwand (10) angebracht sind.

## Claims

1. Liquid metal-cooled nuclear reactor of the so-called pool type having means (9) for applying cooled cooling medium to the reactor vessel wall (1) and a gas cushion for covering the cooling medium, and having an additional dividing wall (10) arranged at a distance from the reactor vessel wall (1) and ending above the level of the cooling medium but below the vessel cover (2), characterised in that the annular chamber thus formed is connected with the gas cushion.

2. Installation according to claim 1, characterised by means (11) for maintaining a current of protective gas in the chamber between the reactor vessel wall (1) and the additional dividing wall (10).

3. Installation according to claim 1, characterised by insulating sheets (12) applied to the gas side of the additional dividing wall (10).

## Revendications

1. Réacteur nucléaire refroidi par du métal liquide du type dit intégré comprenant des dispositifs (9) d'alimentation de la paroi (1) de la cuve du réacteur en agent de refroidissement refroidi et un coussin de gaz recouvrant l'agent de refroidissement, ainsi qu'une cloison de séparation (10) supplémentaire qui est disposée à distance de la paroi (1) de la cuve du réacteur et qui se termine au-dessus du niveau de l'agent de refroidissement (3) mais en dessous du couvercle (2) de la cuve, caractérisé en ce que l'espace annulaire ainsi formé communique avec le coussin de gaz.

2. Installation suivant la revendication 1, caractérisée par des dispositifs (11) pour maintenir un courant de gaz protecteur dans l'espace compris entre la paroi (1) de la cuve du réacteur et la cloison de séparation (10) supplémentaire.

3. Installation suivant la revendication 1, caractérisée par des tôles isolantes (12) qui sont fixées à la face de la cloison de séparation (10) supplémentaire qui se trouve du côté du gaz.